# EUROPEAN PATENT APPLICATION

(11) **EP 2 317 660 A1**
(43) Date of publication of application: **04.05.2011**
(21) Application number: 09252543.5
(22) Date of filing: 03.11.2009
(51) Int. Cl.: H04B 1/28, H04B 1/40

(54) **Multi-channel Receiver**

(71) Applicant: NXP B.V., 5656 AG Eindhoven (NL)
(72) Inventor: Brekelmans, Johannes Hubertus Antonius, Redhill, Surrrey RH1 1DL (GB); Pavlovic, Nenad, Redhill, Surrrey RH1 1DL (GB); van Sinderen, Jan, Redhill, Surrrey RH1 1DL (GB); Breems, Lucien Johannes, Redhill, Surrrey RH1 1DL (GB)
(74) Representative: Ashton, Gareth Mark

(57) **Abstract**

A multi-channel receiver for receiving a wide-band signal comprising a signal splitter for splitting the wide-band signal into a plurality of wide-band streams, a mixer system for down converting each of the wide-band streams with an oscillating signal to produce a plurality of down-converted streams, a filter system for passing one channel from each down-converted stream to produce a plurality of channels, and a gain controlled amplifier system for amplifying each channel according to the strength of the signal of the channel.

## Description

This invention relates to a multi-channel receiver, and particularly, but not exclusively to a wide-band multi-channel receiver, and to a method of producing a plurality of channels from a wide-band signal.

A known wide-band multi-channel receiver comprises an RF mixer to down-convert a received RF signal to an IF frequency, an analogue to digital converter (ADC) to convert the down mixed signal to a digital signal, and a plurality of further mixers, each one of the further mixers selecting one channel from the wide-band digital signal.

Such wide-band multi-channelreceivers are adapted to allow a plurality of channels to be demodulated at the same time. The demodulation is implemented in the digital domain. An analogue to digital convertor (ADC) is used to convert the analogue signals to digital signals demodulate the channels.

A problem with such know wide-band multi-channel receivers is that the ADC, must have a very large dynamic range. This is because the wide-band signal may comprise a combination of weak and strong signals.

It is necessary for the ADC to have a large dynamic range because it is important to ensure that the stronger signals do not create overloading of the ADC input, whilst the weakest channels should still have sufficient signal to noise ratio (SNR).

Overloading of the ADC and/or insufficient SNR on one or more channels will deteriorate and/or corrupt the quality of the demodulated output signals.

The higher the dynamic range of the ADC, the greater the power consumption of the ADC, and the greater the silicon area required to manufacture the ADC.

According to a first aspect of the present invention there is provided a multi-channel receiver for receiving a wide-band signal comprising a signal splitter for splitting the wide-band signal into a plurality of wide-band streams, a mixer system for down-converting each of the wide-band streams with an oscillating signal to produce a plurality of down-converted streams, a filter system for passing one channel from each down-converted stream to produce a plurality of channels, and a gain controlled amplifier system for amplifying each channel according to the strength of the signal of the channel.

The present invention may thus be used to split an incoming wide-band signal into a plurality of desired channels that are substantially equalised relative to one another. An analogue to digital converter (ADC) may then receive the equalised channels in order to convert the equalised analogue channels into digital channels. Because the channels are equalised, the dynamic range of the ADC does not have to be as large as is the case in known wide-band receiver systems.

In embodiments of the invention, the amplifier system will amplify weak signals more than strong signals. This has the effect of equalising the channels before the channels are processed, for example, by being converted from analogue to digital signals by an analogue to digital converter (ADC). This has the advantage that the ADC may have a smaller dynamic range than is the case in prior art systems, since it does not have to be able to receive signals having a wide range of strength.

The wide-band signal is split by the signal splitter into a plurality of wide-band streams. Each wide-band stream has substantially the same bandwidth as the wide-band signal and therefore each wide-band stream is substantially identical to each other wide-band stream, and to the wide-band signal.

Each of these wide-band streams may then be down-converted with the same oscillator signal to produce a plurality of down-converted wide-band streams. Because each wide-band stream is substantially identical to each other wide-band stream and is mixed with the same oscillator signal, the down-converted wide-band streams thus produced are substantially identical to one another.

Because the incoming wide-band signal is split into a plurality of wide-band streams, each of which is down-converted with the same oscillator signal, the channels in the wide-band signal are down-converted to a plurality of down-converted streams each having an Intermediate frequency (IF)₋ This is an important feature of the present invention as claimed since it allows the down-converted streams to be filtered into a plurality of channels and then equalised without having to use RF filters comprising inductors or active RF filters having high power consumption and limited dynamic range. The is due to the fact that is more difficult to process signals having high signal frequencies than those having low signal frequencies. In addition, at lower IF frequencies, it is possible to implement the required level of selectivity using a lower order filter than would be the case if the signals had higher IF frequencies. In addition, the presence of the mixers enables the multichannel receiver to operate at a relatively low power and low noise level i.e. to operate at a high dynamic range.

Each of these substantially identical mixed wide-band streams then passes through the filter system wherein one channel from each of the mixed wide-band streams passes through the filter system, with all the other channels being attenuated. This means that the output from the filter system comprises a plurality of channels corresponding to the desired channels.

Because the incoming wide-band signal is converted to a plurality of channels, it is possible for each channel to be amplified according to the strength of the signal of that channel.

The mixer system may comprise a plurality of mixers, each mixer receiving one of the wide-band streams. The number of mixers forming part of the mixer system may correspond directly to the number of desired channels.

In other embodiments of the invention, each mixer may receive more than one of the wide-band streams.

The filter system may comprise a plurality of filters, each filter being associated with a respective mixer. In such a system, each filter may receive one of the down-converted streams. This means that each filter is adapted to allow a single channel only to pass through the respective filter.

In other embodiments of the invention, each filter may receive more than one of the down-converted streams.

Each filter may be configured to allow a particular bandwidth, or channel to pass through the filter. The filters may be tuned so that each filter allows a different bandwidth to pass through.

Each filter may therefore comprise a single channel reconfigurable complex band pass filter.

The amplifier system may comprise a plurality of amplifiers, each amplifier being associated with a respective filter. In such an embodiment of the invention each amplifier is adapted to amplify one of the channels to generate equalised channels.

Preferably each amplifier comprises a controlled gain amplifiers.

The receiver may further comprise a local oscillator signal generator to generate a local oscillating signal for mixing with each of the wide-band streams.

In some embodiments of the invention, more than one local oscillating signal may be produced for mixing with the wide-band streams. These oscillating signals may be generated by a single local oscillator signal generator or by a plurality of local oscillator signal generators.

Preferably, the receiver further comprises an analogue to digital converter (ADC). By means of an ADC, the equalised channels may be converted into digital channels for onward transmission.

The receiver may further comprise an adder for adding the plurality of equalised channels together before the equalised channels are input into the ADC. The adder may comprise an active circuit comprising a trans-impedance amplifier. Adding may be realized by connecting each input via a resistor to the input (virtual ground) of the trans-impedance amplifier. The input stage of the ADC may already consist of a trans-impedance amplifier. In such a case, each input may be connected via a resistor to the virtual ground (input) of this amplifier

The local oscillator signal may comprise both I and Q phases (in-phase and quadrature), in which case the mixer system may comprise both an I output and Q output. In embodiments of the invention where the mixer system comprises a plurality of mixers, each mixer may comprise an I output and Q output.

In embodiments of the invention where the mixer system, or each of the plurality of mixers comprising the mixer system, has an I output and Q output, the filter system, or in embodiments of the Invention where the filter system comprises a plurality of filters, each filter, will also have an I output and Q output

In such embodiments, each filter will have associated with it two amplifiers one for receiving the I output and one for receiving the Q output.

In addition, the receiver will comprise a first adder and a second adder, the first adder for receiving the I output from the amplifiers, and the second adder for receiving the Q output from the amplifiers.

Further, the ADC will comprise an I input and a Q input, and an I output and an Q output.

The receiver may further comprise a demodulator for demodulating the output of the ADC to produce a plurality of digital demodulated channels.

According to a second aspect of the present invention there is provided a method for producing a plurality of channels from an incoming wide-band signal, including the steps of:
splitting the incoming wide-band signal into a plurality of wide-band streams, each stream having substantially the same band-width as that of the wide-band signal;
mixing each wide-band stream with an oscillating signal to produce a plurality of down-converted streams;
filtering each down-converted stream such that one channel from each down-converted stream is passed, thus producing a plurality of channels;
amplifying each channel according to the strength of the signal of the channel.

The step of down-converting each wide-band stream may comprise the step of down-converting each stream with the same oscillating signal to thereby produce a plurality of down-converted channels, each having a different intermediate frequency.

The method may comprise the further step of adding together the channels after they have been amplified, then converting the channels from analogue to digital signals.

The method may comprise a further step of demodulating the digital signals to produce a plurality of demodulated channels.

The invention will now be described by way of example, with reference to the accompanying drawing in which:

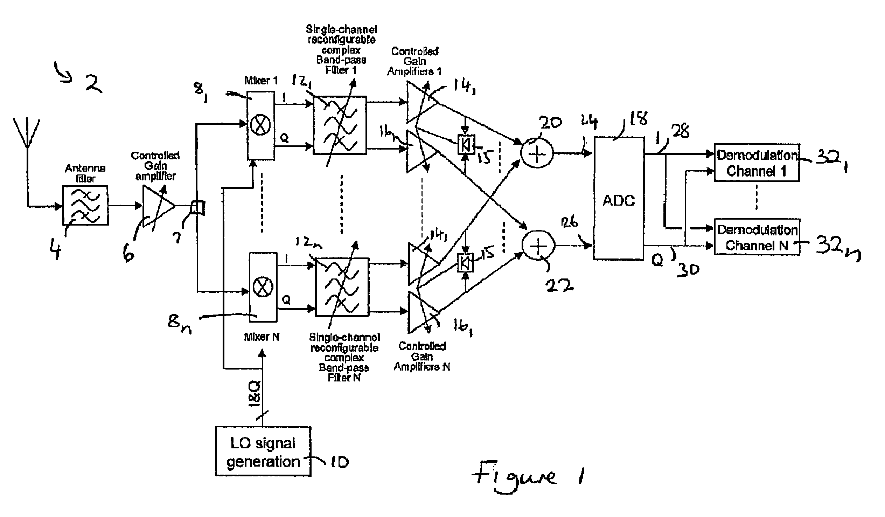

Figure 1 is a schematic representation of a wide-band receivers according to an embodiment of the present invention.

Referring to Figure 1 a multi-channel receiver according to an embodiment of the invention is designated generally by the reference numeral 2. The multi-channel receiver comprises an antenna filter 4 through which an incoming wide-band RF signal is filtered to remove unwanted signals. This signal is then passed through a controlled gain amplifier 6 to increase signal levels so that noise produced in the receiver has less Impact on SNR. The signals then split into a plurality of wide-band streams by a signal splitter 7 to produce an RF signal chain. Each wide-band stream has substantially the same bandwidth as the incoming wide-band signaL

Each wide-band stream passes through a mixer 8₁ to 8ₙ. This means that each mixer 8₁ to 8ₙ will receive substantially the same respective wide-band signal in the form of a wide-band stream. Each mixer B₁ to 8ₙ mixes a wide-band stream with a local oscillator (LO) signal generated by a LO signal generator 10. This means that each wide-band stream is mixed with the same local oscillator signal generator.

In this embodiment the local oscillator signal has both In-phase and Quadrature component, and each mixer 8₁ to 8ₙ has a complex I/Q(in-phase/Quadrature) output. This is appropriate particularly if image suppression is needed, or if the required channels can be located at an RF both higher or lower than the LO frequency. In other words, if a single multiplier is used for the mixer, then IF = ABS (LO-RF), two RF streams having frequencies at the same offset from the LO frequency are down-converted to the same IF frequency. Using both a quadrature and in-phase signal (90 degrees phase difference) for the mixer) makes it possible to differentiate between these two streams after down-conversion to IF.

Each mixer 8₁ to 8ₙ is operably connected to a respective filter 12₁ to 12ₙ. In this embodiment of the invention each filter 12₁to 12ₙ comprises a single channel reconfigurable complex band pass filfer. Each filter 12₁ to 12ₙ is tuned to a different desired channel and thus the output of each filter 12₁ to 12ₙ comprises one of the desired channels. Each of the filters 12₁ to 12ₙ is followed by at least one controlled gain amplifier 14₁ to 14ₙ. In the embodiment illustrated in Figure 1, each filter 12₁to 12ₙ is followed by two controlled gain amplifiers 14₁, 16₁, to 14ₙ, 16ₙ. Each of the filters 14₁ to 14ₙ are in the I path, and each of the amplifiers 16₁ to 16ₙ are in the Q path. Each amplifier 14₁, 16₁, to 14ₙ, 16ₙ forming a pair associated with a particular filter 12, to 12ₙ has the same gain settings as the other amplifier in the pair. Such an arrangement allows for further complex processing or complex filtering.

The receiver 2 further comprises an analogue to digital converter (ADC) (18) downstream of the amplifiers.

All gain settings for the amplifiers are controlled such that the dynamic range needed for the ADC is less than when all gain settings are identical. In other words, each pair of amplifiers may have a different gain setting to each of the other pairs of amplifiers. Alternatively some pairs of amplifiers may have the same gain setting as one or more other pairs of amplifiers. Because the amplifiers may be individually tuned, the required dynamic range for the ADC can be reduced.

This arrangement means that the signal of a weak channel will be amplified more than the signal of a strong channel.

The output from the controlled gain amplifiers 14, 16 is input into two adders 20, 22, the adder 20 being In the I path, and the adder 22 being in the Q path. The adders 20,22 sum the I-outputs and Q-outputs respectively, which summed signals are then input into the analogue to digital converter (ADC) 28. The ADC thus comprises an I-input 24 and a Q-input 26 together with an I-output 28 and a Q-output 30.

If no further complex processing or filtering is required after the ADC 18, an ADC with a single, possibly differential, real input may be used, and all amplifier output signals are be added at this real ADC input. (It is also possible to remove half of the controlled gain amplifiers 14, 16)

The ADC 18 may be a complex band pass ADC with a complex I and Q input or it may consist of two separate real ADCs each processing either the I or Q signal.

The output of the ADC is offered to a multi-channel demodulator to produce a plurality of demodulated channels 32₁ to 32ₙ. The multi-channel demodulator can consist of a number of single-channel demodulators where each demodulator is tuned to a different desired channel.

Gain control may be based upon the output levels of the amplifiers and/or can be derived from level information of the different channels in the demodulator/s.

In this embodiment the receiver 2 thus comprises level detectors 15 for detecting the level of the output from the amplifiers 14, 16.

An embodiment of the invention may be used to receive FM radio signals. In such an embodiment the incoming RF signal may have a frequency in the range of 88 to 108 MHz, the local oscillator may have an oscillating frequency of 109 MHz, intermediate frequency will be in then range of 1 to 21 MHz, and the bandwidth of a single channel may be approximately 20D KHz.

A receiver according to another embodiment of the invention may be used to receive satellite radio (SDARS) signals. In such an embodiment, the incoming wideband signal may have a frequency in the range 2320 to 2345 MHz, the local oscillator may oscillate at a frequency of 2332.5 MHz, the intermediate frequency may range from -12.5 MHz to +12.5 MHz, and the bandwidth of a segment may be approximately 4 MHz.

It is however to be understood that the invention is suitable for use with signals having any desired frequency.

## Claims

1. A multi-channel receiver (2) for receiving a wide-band signal comprising a signal splitter (7) for splitting the wide-band signal into a plurality of wide-band streams, a mixer system (8₁, 8ₙ) for down converting each of the wide-band streams with an oscillating signal to produce a plurality of down-converted streams, a filter system (12₁, 12ₙ) for passing one channel from each down-converted stream to produce a plurality of channels, and a gain controlled amplifier system (14₁, 14ₙ) for amplifying each channel according to the strength of the signal of the channel.

2. A multi-channel receiver according to Claim 1 wherein the mixer system comprises a plurality of mixers (8₁, 8ₙ), each mixer receiving one of the wide-band streams.

3. A multi-channel receiver according to Claim 1 or Claim 2 wherein the filter system comprises a plurality of filters (12₁, 12ₙ), each filter being associated with a respective mixer.

4. A multi-channel receiver according to Claim 3 wherein each filter (12) comprises a single-channel reconfigurable complex band pass filter.

5. A multi-channel receiver according to any one of the preceding claims wherein the amplifier system comprises a plurality of amplifiers (14₁, 14ₙ).each amplifier being associated with a respective filter.

6. A multi-channel receiver according to Claim 5 wherein each amplifier (14) comprises a controlled gain amplifiers.

7. A multi-channel receiver according to any one of the preceding claims further comprising a local oscillator signal generator (10).

8. A multi-channel receiver according to any one of the preceding claims further comprising an analogue to digital converter (ADC).

9. A multi-channel receiver according to any one of the preceding claims further comprising a adder adapted to receive signals from the amplifier system.

10. A multi-channel receiver according to any one of the preceding claims further comprising a demodulator for demodulating the output of the ADC.

11. A multi-channel receiver according to any one of the preceding claims wherein oscillating signal comprises and Q phases, the mixer system comprises an I-output and a Q-output, and the ADC comprises an I-input and a Q-output.

12. A method for producing a plurality of channels from an incoming wide-band signal, including the steps of:
splitting the incoming wide-band signal into a plurality of wide-band streams, each stream having substantially the same band-width as that the wide-band signal;
mixing each wide-band stream with an oscillating signal to produce a plurality of down-converted streams;
filtering each down-converted stream such that one channel from each mixed stream is passed, thus producing a plurality of channels;
amplifying each channel according to the strength of the signal of the channel to produce a plurality of equalised channels.

13. A method according to Claim 12 wherein the step of down-converting each wide-band stream comprises the step of mixing each wide-band stream with the same oscillator signal.

14. A method according to Claim 12 or Claim 13 comprising the further step of adder the channels after they have been amplified, and converting the channels from analogue to digital signals.

15. A method according to Claim 13 comprising the further step of demodulating the digital signals to produce a plurality of demodulated channels.
